Europäisches Patentamt

(19) European Patent Office

Office européen des brevets

(11) Publication number: **0 208 435 B1**

(12) **EUROPEAN PATENT SPECIFICATION**

(45) Date of publication of patent specification: 06.02.91 Bulletin 91/06

(51) Int. Cl.⁵: **B01J 27/16, B01J 35/10**

(21) Application number: 86304606.6

(22) Date of filing: 16.06.86

(54) Activation of aluminum phosphates.

(30) Priority: 27.06.85 US 749241

(43) Date of publication of application: 14.01.87 Bulletin 87/03

(45) Publication of the grant of the patent: 06.02.91 Bulletin 91/06

(84) Designated Contracting States: BE DE FR GB IT NL

(56) References cited:
EP-A- 0 161 818
DE-A- 1 954 326
DE-A- 2 730 228
US-A- 2 120 702
US-A- 3 271 299

(72) Inventor: Bowes, Emmerson
RD1. Box 366A Stonybrook Road
Hopewell New Jersey 08525 (US)
Inventor: Hellring, Stuart Damon
29 Carlton Avenue
Trenton New Jersey 08618 (US)
Inventor: Chang, Clarence Dayton
11 Murray Place
Princeton New Jersey 08540 (US)
Inventor: McVeigh, Harry Allen
905 Fernwood Road
Mooretown New Jersey 08057 (US)
Inventor: Derouane, Eric Gerard
56 Rue des Champs Verts
B-5020 Namur(Champion) (BE)

(74) Representative: Cooper, John Anthony
Mobil Court 3 Clements Inn
London WC2A 2EB (GB)

(73) Proprietor: MOBIL OIL CORPORATION
150 East 42nd Street
New York New York 10017 (US)

## Description

This invention relates to a method for catalytically activating a crystalline aluminum phosphate.

Porous crystalline aluminum phosphates are disclosed in for example, U.S. Patents 4,310,440 and 4,385,994. Because the aluminum/phosphorus atomic ratio of these materials is about unity, they display virtually no ion-exchange or acid-catalytic properties, the framework positive charge on phosphorus being balanced by corresponding negative charge on aluminum :

$$AlPO_4 = (AlO_2^-)(PO_2^+).$$

The pores of these microporous aluminum phosphates typically are uniform and have nominal diameters within the range of 3 to 10 Angstroms, with the intracrystalline adsorption capacity for water at 4.6 torr and 24°C being at least 3.5 weight percent. The adsorption and desorption of water are completely reversible and the aluminum phosphate retains the same essential framework topology in both the hydrated and dehydrated state.

According to the present invention, there is provided a method for catalytically activating a crystalline aluminum phosphate, comprising contacting crystalline aluminum phosphate with steam under conditions sufficient to increase its catalytic activity.

Without wishing to be bound by any particular theory, it is believed that contacting the aluminum phosphate with steam results in partial hydrolysis of lattice bonds, thereby introducing catalytically active acid sites in the aluminum phosphate structure.

The activation takes place in the substantial absence of an activating metal oxide, such as silica. Examples of crystalline aluminum phosphate compositions which may be catalytically activated in accordance with the present invention are described in the aforementioned U.S. Patent No. 4,310,440, the preferred aluminum phosphate being AlPO$_4$–5 described in Example 5 of said Patent. The lattice structure of the crystalline aluminum phosphate may have a characteristic x-ray powder diffraction pattern.

The aluminum phosphate may be composited with a binder material, after activation with steam. Such binder materials include metal oxides such as alumina, silica, silica-alumina, silica-zirconia, silica-thoria, silica-berylia, silica-titania as well as ternary compositions, such as silica-alumina-thoria, silica-alumina-zirconia, silica-alumina-magnesia or silica-magnesia-zirconia. The amount of binder may be, e.g., from 10 to 90 percent by weight, preferably 20 to 80 percent by weight, of the combined aluminum phosphate and binder.

The solid, crystalline aluminum phosphate is activated with steam. The steam, when contacted with the aluminum phosphate, may optionally be accompanied by a suitable carrier or diluent gas.

The crystalline aluminum phosphate can be contacted with steam in an as-synthesized form, wherein organic compounds, typically organic amines or quaternary ammonium cations, may be contained in the microporous voids, or it can be contacted with steam in a precalcined form, wherein such organic compounds have been removed.

When the aluminum phosphate is subjected to steaming, it is held in an atmosphere composed entirely or partly of steam at an elevated temperature. Generally, it is preferred to operate with an atmosphere of 100% steam although partial steam atmospheres may also be used. If a gas other than steam is present it should be an inert gas such as nitrogen. The steaming may be carried out by heating the aluminum phosphate in the presence of water at a temperature up to 600°C, e.g., from 300° to 550°C. The pressure during steaming may be subatmospheric, atmospheric or superatmospheric pressure, generally in the range of 2 to 5065 kPa (0.02 to 50 atm), preferably 50 to 810 kPa (0.5 to 8 atm). The steaming should be continued for a period sufficient to activate the aluminum phosphate, preferably from 1-48 hours.

The steam may be produced in-situ, for example, by the dehydration of alcohols such as methanol, ethanol, propanol, n-butanol or pentanol to produce the steam, with olefins as a by-product or by the combustion of hydrocarbons to produce carbon oxides and steam.

The steaming may be carried out under conditions such as those described in European Patent No. 34,444.

The acid catalytic activity of a catalyst may be measured in terms of its alpha value, which reflects the activity of the catalyst relative to a high activity silica-alumina cracking catalyst. To determine the alpha value, n-hexane conversion is determined at a suitable temperature between 550°F to 1000°F (228° to 538°C), preferably at 1000°F (538°C). Conversion is varied by variation in space velocity such that a conversion level of up to about 60 percent of n-hexane is obtained and converted to a rate constant per unit volume of zeolite and compared with that of silica-alumina catalyst which is normalized to a reference activity at 1000°F (538°C). The catalytic activity of the catalyst is then expressed as multiple of this standard, i.e.

the silica-alumina standard. The silica-alumina reference catalyst contains about 10 weight percent $Al_2O_3$ and the remainder $SiO_2$. This method of determining alpha, modified as described above, is described in the Journal of Catalysis, Vol. VI, pages 278-287, 1966.

The extent of the activation produced by the present method is notable and increases of over 100 percent in the alpha value may be obtained.

Aluminum phosphate materials are readily convertible by the steaming process of the present invention to catalytically active materials for a variety of organic, e.g. hydrocarbon, compound conversion processes. Examples of organic compounds which may be catalytically converted include hydrocarbons, oxygenated hydrocarbons (e.g., alcohols and ethers) and other non-hydrocarbon compounds (e.g., organic compounds containing sulfur or nitrogen). Such conversion processes include, as non-limiting examples, cracking hydrocarbons with reaction conditions including a temperature of 300 to 700°C, a pressure of 10 to 3040 kPa (0.1 atmosphere to 30 atmospheres) and a weight hourly space velocity of 0.1 $hr^{-1}$ to 20 $hr^{-1}$ ; dehydrogenating hydrocarbon compounds with reaction conditions including a temperature of 300 to 700°C, a pressure of 10 to 1013 kPa (0.1 to 10 atmospheres) and a weight hourly space velocity of 0.1 to 20 ; converting paraffins to aromatics with reaction conditions including a temperature of 100 to 700°C, a pressure of 10 to 6080 kPa (0.1 atmosphere to 60 atmospheres), a weight hourly space velocity of 0.5 to 400 and a hydrogen/hydrocarbon mole ratio of 0 to 20 ; converting olefins to aromatics, e.g. benzene, toluene and xylenes, with reaction conditions including a temperature of 100 to 700°C, a pressure of 10 to 6080 kPa (0.1 to 60 atmospheres), a weight hourly space velocity of 0.5 to 400 and a hydrogen/hydrocarbon mole ratio of 0 to 20 ; converting alcohols, e.g. methanol, or ethers, e.g. dimethylether, or mixtures thereof to hydrocarbons including aromatics with reaction conditions including a temperature of 275 to 600°C, a pressure of 5 to 5070 kPa (0.5 to 50 atmospheres) and a liquid hourly space velocity of 0.5 to 100 ; isomerizing xylene feedstock components with reaction conditions including a temperature of 230 to 510°C, a pressure of 300 to 3550 kPa (3 to 35 atmospheres, a weight hourly space velocity of from about 0.1 to 200 and a hydrogen/hydrocarbon mole ratio of about 0 to about 100 ; disproportionating toluene with reaction conditions including a temperature of 200 to 760°C, a pressure of 100 to 6080 kPa (1 to 60 atmospheres) and a weight hourly space velocity of 0.08 to 20 ; alkylating aromatic hydrocarbons, e.g. benzene and alkylbenzenes, in the presence of an alkylating agent, e.g. olefins, formaldehyde, alkyl halides and alcohols, with reaction conditions including a temperature of 340 to 500°C, a pressure of 100 to 20260 kPa (1 to 200 atmospheres), a weight hourly space velocity of 2 to 2000 and an aromatic hydrocarbon/alkylating agent mole ratio of 1/1 to 20/1 ; and transalkylating aromatic hydrocarbons in the presence of polyalkylaromatic hydrocarbons with reaction conditions including a temperature of 340 to 500°C, a pressure of 100 to 20260 kPa (1 to 200 atmospheres), a weight hourly space velocity of 10 to 1000 and an aromatic hydrocarbon/poly- alkylaromatic hydrocarbon mole ratio of 1/1 to 16/1.

In general, therefore, catalytic conversion conditions over an activated catalyst in accordance with the present invention include a temperature of 100°C to 760°C, a pressure of 10 to 20260 kPa (to 0.1 to 200 atmospheres), a weight hourly space velocity of 0.08 $hr^{-1}$ to 2000 $hr^{-1}$ and a hydrogen/organic, e.g. hydrocarbon, compound of 0 to 100.

## EXAMPLE 1

$AlPO_4$–5 was prepared according to Example 5 in U.S. Patent 4,310,440 to yield 25 g of material. The sample had an X-ray diffraction pattern identical to that given in the Patent and had little cracking activity (alpha = 0.2). The organic template used in the synthesis was removed by calcination at (538°C for 3hr. in a nitrogen atmosphere using programmed heating (1°C/min). The calcined sample had lost no crystallinity, and retained a low alpha value (alpha = 0.3).

## EXAMPLE 2

A sample (2.0 g) of the material of Example 1 was calcined (538°C) in a flowing atmosphere of steam (1 atm) for 3hr.

## EXAMPLE 3

Two samples (2.0 g each) of the material of Example 1 were separately calcined (538°C) in a flowing atmosphere of steam (1 atm) for 18hr.

## EXAMPLE 4

AlPO$_4$–5 samples from each of the above Examples (2-3 ml) were treated with a stream of propylene gas in a fixed bed reactor under identical conditions (400°C ; 3550 kPa ; 2 LHSV). The product distribution determined after two hours on stream clearly showed that the activity of the catalyst increased after steaming (Table 1). Enhanced activity was apparent from both increased conversion of the feed and the increased selectivity to C$_6$+ hydrocarbons.

## Table 1

### Propylene Oligomerization over AlPO$_4$–5

| Catalyst | Example 1 (as calcined) | Example 2 | Example 3 |
|---|---|---|---|
| Steam Time (hrs) | 0 | 3 | 18 |
| Conversion % | 31.33 | 44.91 | 44.46 |
| Hydrocarbon Product Distribution (wt.%) | | | |
| CH$_4$ | 0.29 | 0.16 | 0.06 |
| C$_2$ | 0.12 | 0.16 | 0.07 |
| C$_3$ | 6.70 | 5.43 | 4.51 |
| n–C$_4$ | 0.26 | 0.22 | 0.16 |
| i–C$_4$ | 4.65 | 4.20 | 3.44 |
| n–C$_5$ | 0.47 | 0.46 | 0.36 |
| i–C$_5$ | 4.81 | 4.44 | 3.51 |
| C$_2$= | 0.17 | 0.15 | 0.11 |
| C$_3$= | – | – | – |
| C$_4$= | 8.56 | 7.54 | 7.06 |
| C$_5$= | 11.22 | 10.71 | 5.77 |
| C$_6$= | 28.77 | 25.26 | 23.60 |
| C$_6$ PNA + C$_7$ | 12.40 | 12.17 | 16.81 |
| C$_8$ | 5.10 | 9.78 | 7.65 |
| C$_9$ | 9.26 | 10.84 | 12.99 |
| C$_{10}$+ | 7.22 | 8.50 | 13.92 |

PNA means paraffins, naphthenes and aromatics

## EXAMPLE 5

Samples described in Examples 1 and 3 (2 ml) were treated with a stream of propylene (250 GHSV) and benzene (2 LHSV) in a fixed bed reactor under identical conditions (250°C ; 2170 kPa). Analysis of the effluent after 2 hours on steam again revealed that steaming had enhanced the catalytic activity of the AlPO$_4$–5 (Table 2). This was concluded from the observed increase in total weight percent product. In addition, the steamed sample gave some light gas products indicative of propylene cracking.

## Table 2

### Propylene Alkylation of Benzene over AlPO₄-5

|  | Example 1 (as calcined) | Example 1* (as calcined) | Example 3 (second sample) | Example 3 (second sample) |
|---|---|---|---|---|
| **Catalyst** |  |  |  |  |
| Hrs. of Steaming | 0 | 0 | 18 | 18 |
| TOS (hrs) | 2.0 | 2.75 | 2.0 | 3.0 |
| **Hydrocarbon Selectivity** |  |  |  |  |
| Methane | 0.0 | 0.0 | 0.38 | 0.10 |
| Ethane | 0.0 | 0.0 | 0.46 | 0.06 |
| Propane | 1.21 | 1.14 | 0.49 | 0.66 |
| Ethylene | 0.0 | 0.0 | 0.42 | 0.06 |
| Cumene | 84.14 | 86.06 | 76.29 | 84.80 |
| Diisopropyl Benzenes | 14.65 | 12.80 | 21.97 | 14.32 |
| Total wt.% Product | 4.23 | 4.30 | 15.98 | 7.04 |
| **Conversion %** |  |  |  |  |
| Propylene | 18.57 | 23.17 | 28.15 | 26.65 |
| Benzene | 1.29 | 0.56 | 13.63 | 3.35 |

*Catalyst regenerated from run of Example 4 with $C_3^=$

Aluminum phosphates are generally considered to be of little interest for acid catalyzed reactions due to their essential framework neutrality. This invention provides a method by which the catalytic activity may be enhanced for acid promoted processes.

## Claims

1. A method for activating a crystalline aluminum phosphate comprising contacting the crystalline aluminum phosphate material with steam under conditions sufficient to increase its catalytic activity ; characterizal in that said contacting takes place in the substantial absence of a metal oxide.

2. A method according to claim 1 wherein the contacting conditions include a temperature of 600°C or less and a steam pressure or partial pressure of 2 to 5065 kPa (0.02 to 50 atmospheres).

3. A method according to claim 1 wherein the contacting conditions include a temperature of 300°C to 550°C and a steam pressure or partial pressure of 50 to 810 kPa (0.5 to 8 atmospheres).

4. A method according to any preceding claim, wherein said aluminum phosphate is a microporous material with uniform pores having a nominal diameter within the range of about 3 to 10 Angstroms, and an intracrystalline adsorption capacity for water at 4.6 torr and 24°C of at least 3.5 weight percent, the adsorption and desorption of water being completely reversible while the aluminum phosphate retains the same essential framework topology in both the hydrated and dehydrated state.

5. A method according to claim 1, wherein said aluminum phosphate has a framework structure with the empirical formula $AlPO_4$.

6. A method according to any preceding claim, wherein said aluminum phosphate is subjected to calcination, to remove any organic matter used in the synthesis thereof, prior to said contacting with steam.

7. A process for catalytically converting an organic compound, said process comprising contacting said organic compound with a porous crystalline aluminum phosphate activated according to the method of any preceding claim.

## Ansprüche

1. Verfahren zur Aktivierung eines kristallinen Aluminiumphosphats, das den Kontakt des kristallinen Aluminiumphosphatmaterials mit Dampf bei Bedingungen umfaßt, die ausreichend sind, um dessen katalytische Aktivität zu steigern, dadurch gekennzeichnet, daß der Kontakt bei wesentlicher Abwesenheit eines Metalloxids stattfindet.

2. Verfahren nach Anspruch 1, worin die Kontaktbedingungen eine Temperatur von 600°C oder weniger und einen Dampfdruck oder Partialdruck von 2 bis 5065 kPa (0,02 bis 50 Atmosphären) umfassen.

3. Verfahren nach Anspruch 1, worin die Kontaktbedingungen eine Temperatur von 300°C bis 550°C und einen Dampfdruck oder Partialdruck von 50 bis 810 kPa (0,5 bis 8 Atmosphären) umfassen.

4. Verfahren nach einem der vorstehenden Ansprüche, worin das Aluminiumphosphat ein mikroporöses Material mit einheitlichen Poren, mit einem vorherrschenden Durchmesser im Bereich von etwa 3 bis 10 Angstrom und einer intrakristallinen Adsorptionskapazität für Wasser bei 4,6 Torr und 24°C von mindestens 3,5 Gew.-% ist, wobei die Adsorption und Desorption von Wasser vollständig reversibel ist, wobei das Aluminiumphosphat sowohl im hydratisierten, als auch dehydratisierten Zustand die gleiche wesentliche Gittertopologie beibehält.

5. Verfahren nach Anspruch 1, worin das Aluminiumphosphat eine Gitterstruktur mit der empirischen Formel AlPO$_4$ aufweist.

6. Verfahren nach einem der vordstehenden Ansprüche, worin das Aluminiumphosphat vor dem Kontakt mit dem Dampf der Kalzinierung unterzogen wird, um jedes feie, des zur Synthese verwendeten organischen Materials zu entfernen.

7. Verfahren zur katalytischen Umwandlung einer organischen Verbindung, wobei dieses Verfahren den kontakt der organischen Verbindung mit einem porösen, kristallinen Aluminiumphosphat umfaßt, das nach dem Verfahren nach einem der vorstehenden Ansprüche aktiviert wurde.

## Revendications

1. Un procédé d'activation d'un phosphate d'aluminium cristallin, dans lequel le phosphate d'aluminium cristallin est mis en contact avec de la vapeur d'eau dans des conditions assurant une augmentation de son activité catalytique, caractérisé en ce que cette mise en contact avec la vapeur d'eau est effectuée sensiblement en l'absence de tout oxyde métallique.

2. Un procédé selon la revendication 1, dans lequel les conditions de mise en contact impliquent une température d'au plus 600°C et une pression ou pression partielle de vapeur d'eau comprise entre 2 et 5065 kPa (entre 0,02 et 50 atmosphères).

3. Un procédé selon la revendication 1, dans lequel les conditions de mise en contact impliquent une température comprise entre 300°C et 550°C et une pression ou pression partielle de vapeur comprise entre 50 et 810 kPa (entre 0,5 et 8 atmosphères).

4. Un procédé selon une quelconque des revendications précédentes, dans lequel le phosphate d'aluminium précité est un matériau microporeux à pores uniformes d'un diamètre compris entre environ 3 et 10 angströms, présentant une capacité d'adsorption intracristalline d'eau à 4,6 torr et 24°C d'au moins 3,5% en poids, l'adsorption et la désorption d'eau étant totalement réversibles, cependant que le phosphate d'aluminium conserve essentiellement ses caractéristiques de structure tant à l'état hydraté qu'à l'état déshydraté.

5. Un procédé selon la revendication 1, dans lequel ledit phosphate d'aluminium présente une formule structurelle empirique exprimée par AlPO$_4$.

6. Un procédé selon une quelconque des revendications précédentes, dans lequel on soumet ledit phosphate d'aluminium à une calcination, avant sa mise en contact avec la vapeur d'eau, afin d'en éliminer toutes substances organiques utilisées lors de sa fabrication.

7. Un procédé de conversion catalytique d'un composé organique, dans lequel on met ledit composé organique en contact avec du phosphate d'aluminium cristallin poreux qui a été activé par le procédé défini dans une quelconque des revendications précédentes.